# FASCICULE DE BREVET EUROPEEN

(11) **EP 2 587 006 B1**
(45) Date de publication et mention de la délivrance du brevet: **23.04.2014**
(21) Numéro de dépôt: 12290208.3
(22) Date de dépôt: 26.06.2012
(51) Int. Cl.: F01K 13/00, F01K 23/06, F01K 25/10

(54) **Procédé de contrôle d'un circuit fermé fonctionnant selon un cycle de Rankine et circuit utilisant un tel procédé**
Vorrichtung zur Kontrolle eines geschlossenen Kreislaufs, der wie ein Rankine-Kreislauf funktioniert, und Kreislauf, bei dem ein solches Verfahren zum Einsatz kommt
Method for controlling a closed circuit operating according to a Rankine cycle and circuit using such a method

(30) Priorité: 28.10.2011 FR 1103306
(43) Date de publication de la demande: 01.05.2013
(73) Titulaire: IFP Energies Nouvelles, 92852 Rueil Malmaison Cedex (FR)
(72) Inventeur: Leduc, Pierre, 78650 Beynes (FR)

(56) Documents cités:
- FR-A1- 2 884 555

## Description

La présente invention se rapporte à un procédé de contrôle d'un circuit fermé fonctionnant selon un cycle de Rankine ainsi qu'à un circuit utilisant un tel procédé.

Comme cela est largement connu, le cycle de Rankine est un cycle thermodynamique par lequel de la chaleur provenant d'une source de chaleur externe est transmise à un circuit fermé qui contient un fluide.

Il existe de nombreux types de circuit à cycle de Rankine et plus particulièrement ceux qui font appel un changement de phase (liquide/vapeur) d'un fluide de travail.

Ce type de cycle se décompose généralement en une étape durant laquelle le fluide de travail utilisé sous forme liquide, est comprimé de manière isentropique, suivie d'une étape où ce fluide liquide comprimé est chauffé et vaporisé au contact d'une source de chaleur.

Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe-compresseur pour faire circuler et comprimer le fluide sous forme liquide, un évaporateur qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie mécanique ou électrique, et un condenseur grâce auquel la chaleur contenue dans la vapeur est cédée à une source froide, généralement de l'air extérieur qui balaye ce condenseur, pour transformer cette vapeur en un fluide sous forme liquide.

Dans ce type de circuit, le fluide utilisé est généralement de l'eau mais d'autres types de fluide, par exemple des fluides organiques ou des mélanges de fluides organiques, peuvent également être utilisés.

A titre d'exemple, ces fluides organiques peuvent être du butane, de l'éthanol, des hydrofluorocarbures, de l'ammoniac, du dioxyde de carbone...

Il est également connu, notamment par le document FR 2 884 555, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

Dans certains cas de fonctionnement, le fluide de travail est amené à circuler sous de fortes pressions (jusqu'à environ 40 bar, voire 80 bar) et avec des températures très élevées, voisines de 400°C. Ces pressions et températures du fluide sont maintenues dans la plage de fonctionnement pour laquelle le système a été dimensionné par l'intermédiaire d'un système de contrôle/commande qui agit notamment sur la pompe, la machine de détente ainsi que sur les actionneurs de pilotage des différents éléments du circuit.

De plus, dans le cas d'utilisation de certains fluides de travail, il peut s'avérer que ce fluide peut également être intrinsèquement dangereux, notamment inflammable.

Ainsi, en cas de situation anormale du véhicule comme en cas d'accident, le système de contrôle/commande du circuit du système Rankine peut devenir inopérant, soit à cause d'un dysfonctionnement du système de contrôle/commande lui-même, soit de par le dysfonctionnement des capteurs ou des actionneurs de pilotage.

A cause de l'inertie thermique de la source chaude ou par suite d'un incendie du véhicule qui pourrait survenir durant l'accident, la pression et la température du fluide de travail peuvent continuer à augmenter. Dans ce cas, des niveaux de température ou de pression de ce fluide incompatibles avec le dimensionnement du système Rankine peuvent être atteints. Ces niveaux peuvent conduire à une rupture brutale d'un ou plusieurs éléments du circuit (conduite de circulation du fluide, échangeur,...) en entrainant un sur-accident.

La présente invention se propose de remédier aux inconvénients ci-dessus grâce à un procédé qui permet d'adopter une attitude préventive visant à limiter voire éviter la rupture du circuit fermé.

A cet effet, la présente invention vise un procédé de contrôle d'un circuit fermé fonctionnant selon un cycle de Rankine pour un véhicule automobile, ledit circuit comprenant une pompe de circulation et de compression d'un fluide de travail, un échangeur de chaleur balayé par une source chaude pour chauffer ledit fluide de travail, des moyens de détente du fluide chaud, et un échangeur de refroidissement balayé par un fluide de refroidissement pour le refroidissement de ce fluide de travail, **caractérisé en ce qu'**il consiste, après une détection d'une situation d'accident du véhicule, à mettre l'intérieur du circuit en communication avec l'air ambiant.

Le procédé peut consister à mettre le circuit en communication avec l'air ambiant après détection de chocs violents contre le véhicule.

Le procédé peut consister à mettre le circuit en communication avec l'air ambiant après détection d'un incendie du véhicule.

Le procédé peut consister à commander des moyens de vannage d'une ouverture) prévue sur le circuit pour mettre ledit circuit en communication avec l'air ambiant.

L'invention concerne également un circuit fermé fonctionnant selon un cycle de Rankine pour un véhicule automobile comprenant une pompe de circulation et de compression d'un fluide de travail, un échangeur de chaleur balayé par une source chaude pour chauffer ledit fluide de travail, des moyens de détente du fluide chaud, un échangeur de refroidissement traversé par un fluide de refroidissement pour le refroidissement de ce fluide de travail et des conduites de circulation dudit fluide, **caractérisé en ce qu'**il comprend un dispositif de mise en communication de l'intérieur du circuit avec l'air ambiant, ledit dispositif étant opérationnel en cas de situation d'accident du véhicule.

Le dispositif peut comprendre une ouverture placée sur au moins l'un des éléments du circuit et des moyens de vannage contrôlant cette ouverture.

L'ouverture peut être placée sur au moins un des échangeurs et/ou sur au moins une des conduites de circulation.

Les moyens de vannage peuvent comprendre une vanne basculant entre une position extrême d'obturation de l'ouverture et une autre position extrême de libération de l'ouverture.

La source chaude peut provenir des gaz d'échappement d'un moteur à combustion interne.

Les autres caractéristiques et avantages de l'invention vont apparaître à la lecture de la description qui va suivre, donnée à titre uniquement illustratif et non limitatif, et à laquelle est annexée la figure unique qui montre un circuit fermé fonctionnant selon un cycle de Rankine avec son système de contrôle/commande selon l'invention.

Cette description se rapporte plus particulièrement à un circuit fermé avec un fluide à changement de phase, mais tous autres circuits à cycle de Rankine, comme ceux dits à fluides supercritiques (par exemple ceux au CO2), peuvent être utilisés.

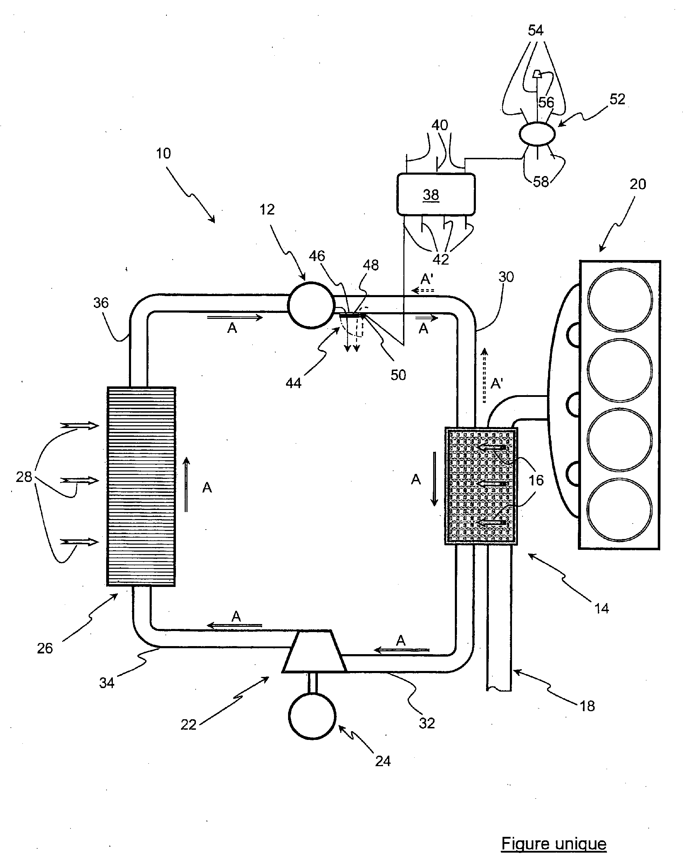

Sur la figure 1, le circuit fermé à cycle de Rankine 10 comprend un moyen de circulation et de compression 12 d'un fluide de travail, ici de l'eau, circulant dans ce circuit selon un sens horaire (Flèches A). Ce moyen, dénommé pompe dans la suite de la description, permet de comprimer cette eau entre l'entrée de la pompe et sa sortie où cette eau, toujours sous forme liquide, est à pression élevée.

Cette pompe est avantageusement entrainée en rotation par tous moyens connus, comme par un moteur électrique (non représenté).

Ce circuit comporte aussi un échangeur de chaleur 14, dénommé évaporateur, traversé par l'eau comprimée provenant de la pompe et qui ressort de cet évaporateur sous forme de vapeur comprimée chaude.

Cet évaporateur est balayé par une source chaude 16 provenant des gaz d'échappement circulant dans la ligne d'échappement 18 d'un moteur à combustion interne 20.

De manière préférentielle, ce moteur est un moteur à combustion interne d'un véhicule automobile.

Ce circuit comporte également une machine de détente réceptrice 22 recevant à son admission la vapeur d'eau comprimée à haute pression et à partir duquel la vapeur d'eau ressort de ce détendeur sous forme de vapeur détendue à basse pression.

A titre d'exemple, cette machine de détente est une turbine de détente dont le rotor (non représenté) est entraîné en rotation par la vapeur d'eau. Ce rotor est avantageusement relié à tout dispositif connu permettant d'utiliser l'énergie mécanique récupérée, par exemple à un système de transmission d'un véhicule pour l'entrainement des roues, ou de transformer l'énergie mécanique récupérée en une autre énergie, comme par exemple à une génératrice électrique 24.

Le circuit comporte encore un échangeur de refroidissement 26, appelé condenseur dans la suite de la description. Ce condenseur permet de transformer la vapeur basse pression détendue qui provient de la turbine en une eau sous forme liquide après son passage au travers de ce condenseur.

A titre d'exemple, ce condenseur est formé d'un ensemble de tubes et d'ailettes de refroidissement balayé par un fluide de refroidissement 28 qui traverse le condenseur entre sa face d'entrée et sa face de sortie en refroidissant la vapeur détendue et en la condensant.

Ce fluide de refroidissement est ici de l'air extérieur à température ambiante, mais tout autre fluide de refroidissement, comme de l'eau, peut être utilisé pour assurer la condensation de la vapeur.

Les différents éléments du circuit sont reliés entre eux par des conduites de circulation de fluide 30, 32, 34, 36 permettant de relier successivement la pompe avec l'évaporateur (conduite 30), l'évaporateur avec la turbine (conduite 32), la turbine avec le condenseur (conduite 34) et le condenseur avec la pompe (conduite 36) pour que le fluide de travail, sous forme liquide ou sous forme vapeur, circule selon le sens indiqué par les flèches A.

Comme cela est largement connu, ce circuit est relié à un système de contrôle/commande 38 permettant d'assurer sa gestion. Notamment, ce système reçoit des informations sur le fonctionnement de ce circuit par des lignes 40. Plus particulièrement, certaines de ces lignes reçoivent des informations à partir de différents capteurs prévus dans ce circuit, comme la pression ou la température de l'eau (ou de la vapeur d'eau). A partir des informations reçues, le système 38 commande des éléments du circuit au travers de lignes de commande 42 nécessaire à l'obtention de la plage de fonctionnement souhaité. Ces lignes de commande permettent d'agir notamment sur la pompe 12 et sur la turbine 22.

Le circuit illustré à la figure unique comprend également un dispositif de mise à l'air libre 44 du circuit fermé qui permet de réaliser une vidange préventif partielle ou totale du fluide contenu dans ce circuit.

Ce dispositif comprend une ouverture 46 pratiquée sur une des conduites de circulation, ici la conduite de circulation 30 prévue entre la pompe 12 et l'évaporateur 14.

Sans sortir du cadre de l'invention cette ouverture peut être également prévue sur un ou plusieurs éléments du circuit comme les échangeurs de chauffage et/ou de refroidissement, la pompe, la turbine.

Des moyens de vannage sont placés sur cette ouverture pour l'obturer ou la libérer.

Avantageusement, ces moyens de vannage comprennent une vanne 48, de préférence bistable, qui bascule autour d'un axe de basculement 50. Cette vanne est commandée en basculement par tous moyens connus, ici à titre d'exemple un moteur électrique (non représenté).

Le basculement de cette vanne est avantageusement contrôlé par une des lignes de commande 42 du système de contrôle/commande 38 et qui agit sur le moteur électrique de basculement.

Ce système de contrôle/commande 38 reçoit également par une ligne 40 des informations provenant d'une unité de gestion de situation anormale du véhicule.

A titre d'exemple, cette unité peut être un contrôleur d'accident 52, plus connu sous le terme anglais de "crash-line", qui est prévu pour réduire les conséquences en cas d'accident du véhicule, comme une collision, un incendie, un renversement du véhicule,...

Ce contrôleur permet ainsi de mettre en oeuvre de nombreuses actions préventives pour réduire les conséquences de cette situation d'accident et en particulier en cas de chocs violents contre un obstacle fixe ou mobile.

Plus précisément, ce contrôleur comporte des lignes d'information 54 dont certaines sont reliées à des capteurs 56, comme des capteurs de chocs et/ou de décélérations brutales du véhicule.

Après réception de l'information relative à cette situation d'accident du véhicule, le contrôleur transmet, par une ou plusieurs lignes de commande 58, un ou plusieurs signaux pour déclencher des éléments de sécurité du véhicule. Ces éléments peuvent être des airbags et/ou des pré-tensionneurs des ceintures de sécurité.

Ces signaux peuvent également déclencher la coupure d'alimentation électrique du véhicule, le rehaussement du capot pour constituer un dispositif amortisseur, notamment en cas d'un choc avec un piéton, l'escamotage des balais d'essuie-glaces pour éviter qu'ils ne blessent un piéton, etc.

Après réception du signal provenant du contrôleur qui a détecté une situation d'accident, le système de contrôle/commande 38 commande également la mise à l'air libre du circuit.

Ce système commande, par une ligne 42, le moteur de la vanne 48 pour que celle-ci passe d'une position initiale d'obturation de l'ouverture 46, comme représenté en trait fort sur la figure à une position de libération de cette ouverture 46 (représentée en traits pointillés sur la figure).

Ainsi, l'intérieur du circuit est en communication avec l'air ambiant en le mettant ainsi à l'air libre.

Par cela, l'ouverture 46 n'est plus obturée et le fluide de travail contenu dans le circuit 10 peut être évacué en totalité ou en partie au travers de cette ouverture, soit par gravité, soit sous l'effet de la pression régnant dans le circuit.

Ce fluide de travail peut être évidement évacué sous forme liquide ou sous forme gazeuse dans le sens de circulation des flèches A. Ce fluide peut également être évacué dans un sens de circulation inverse (flèche A') dans l'éventualité où le fluide contenu dans le circuit ne puisse pas circuler dans le sens conventionnel, comme suite à une obstruction d'un ou plusieurs conduites de circulation.

Cette vidange préventive peut ainsi éviter ainsi une rupture du circuit qui peut avoir lieu bien après la détection de cette situation anormale du véhicule, ici en l'occurrence un accident.

Ceci permet d'éviter une aggravation de la situation, notamment lorsque des équipes de secours sont en train d'intervenir sur le véhicule.

De manière alternative, il peut être prévu que la vanne 48 soit commandée par une des lignes 58 provenant directement du contrôleur d'accident 52.

Bien entendu, cette situation d'accident du véhicule peut concerner toute autre circonstance comme un incendie pour lequel une mise en communication avec l'air ambiant permet une vidange préventive du circuit de manière à éviter toute rupture brutale de ce circuit.

Cet incendie pourra être détecté par tous moyens connus, comme des détecteurs de fumées ou une mesure de température, qui sont reliés au contrôleur d'accident 52.

Sans sortir du cadre de l'invention, il peut être prévu que l'ouverture 46 soit placée sur d'autres conduites de circulation et/ou sur un des éléments du circuit : échangeurs, pompe, turbine,...

## Revendications

1. Procédé de contrôle d'un circuit fermé (10) fonctionnant selon un cycle de Rankine pour un véhicule automobile, ledit circuit comprenant une pompe de circulation et de compression (12) d'un fluide de travail, un échangeur de chaleur (14) balayé par une source chaude (16) pour chauffer ledit fluide de travail, des moyens de détente (22) du fluide chaud, et un échangeur de refroidissement (26) balayé par un fluide de refroidissement (28) pour le refroidissement de ce fluide de travail, **caractérisé en ce qu'**il consiste, après une détection d'une situation d'accident du véhicule, à mettre l'intérieur du circuit en communication avec l'air ambiant.

2. Procédé selon la revendication 1, **caractérisé en ce qu'**il consiste à mettre le circuit en communication avec l'air ambiant après détection de chocs violents contre le véhicule.

3. Procédé selon la revendication 1, **caractérisé en ce qu'**il consiste à mettre le circuit en communication avec l'air ambiant après détection d'un incendie du véhicule.

4. Procédé selon l'une des revendications 1 à 3, **caractérisé en ce qu'**il consiste à commander des moyens de vannage (48) d'une ouverture (46) prévue sur le circuit pour mettre ledit circuit en communication avec l'air ambiant.

5. Circuit fermé fonctionnant selon un cycle de Rankine pour un véhicule automobile comprenant une pompe de circulation et de compression (12) d'un fluide de travail, un échangeur de chaleur (14) balayé par une source chaude (16) pour chauffer ledit fluide de travail, des moyens de détente (22) du fluide chaud, un échangeur de refroidissement (26) traversé par un fluide de refroidissement pour le refroidissement de ce fluide de travail et des conduites de circulation (30, 32, 34, 36) dudit fluide, **caractérisé en ce qu'**il comprend un dispositif (44) de mise en communication de l'intérieur du circuit avec l'air ambiant, ledit dispositif étant opérationnel en cas de situation d'accident du véhicule.

6. Circuit fermé selon la revendication 5, **caractérisé en ce que** le dispositif comprend une ouverture (46) placée sur au moins l'un des éléments du circuit et des moyens de vannage (48) contrôlant cette ouverture.

7. Circuit fermé selon la revendication 6, **caractérisé en ce que** l'ouverture (46) est placée sur au moins un des échangeurs (14, 26).

8. Circuit fermé selon la revendication 6, **caractérisé en ce que** l'ouverture (46) est placée sur au moins une des conduites de circulation (30, 32, 34, 36).

9. Circuit fermé selon la revendication 6, **caractérisé en ce que** les moyens de vannage comprennent une vanne (48) basculant entre une position extrême d'obturation de l'ouverture (46) et une autre position extrême de libération de l'ouverture.

10. Circuit selon la revendication 5, **caractérisé en ce que** la source chaude (16) provient des gaz d'échappement d'un moteur à combustion interne (20).

## Patentansprüche

1. Verfahren zur Kontrolle eines geschlossenen Kreislaufes (10), der nach einem Rankine-Zyklus funktioniert, für ein Kraftfahrzeug, wobei der Schaltkreis eine Umlauf- und Kompressionspumpe (12) eines Arbeitsfluids, einen Wärmetauscher (14), der von einer heißen Quelle (16) abgetastet wird, um das Arbeitsfluid zu erhitzen, Druckminderungsmittel (22) für das heiße Fluid und einen Kühltauscher (26), der von einem Kühlfluid (28) abgetastet wird, um dieses Arbeitsfluid zu kühlen, umfasst, **dadurch gekennzeichnet, dass** es nach einer Erfassung einer Unfallsituation des Fahrzeugs darin besteht, das Innere des Kreislaufes mit der Raumluft in Verbindung zu bringen.

2. Verfahren nach Anspruch 1, **dadurch gekennzeichnet, dass** es darin besteht, den Kreislauf nach Erfassung von heftigen Stößen gegen das Fahrzeug mit der Raumluft in Verbindung zu bringen.

3. Verfahren nach Anspruch 1, **dadurch gekennzeichnet, dass** es darin besteht, den Kreislauf nach Erfassung eines Brands des Fahrzeugs mit der Raumluft in Verbindung zu bringen.

4. Verfahren nach einem der Ansprüche 1 bis 3, **dadurch gekennzeichnet, dass** es darin besteht, Ventilmittel (48) einer Öffnung (46), die auf dem Kreislauf vorgesehen ist, zu steuern, um den Kreislauf mit der Raumluft in Verbindung zu bringen.

5. Geschlossener Kreislauf, der nach einem Rankine-Zyklus funktioniert, für ein Kraftfahrzeug, wobei der Kreislauf eine Umlauf- und Kompressionspumpe (12) eines Arbeitsfluids, einen Wärmetauscher (14), der von einer heißen Quelle (16) abgetastet wird, um das Arbeitsfluid zu erhitzen, Druckminderungsmittel (22) für das heiße Fluid und einen Kühltauscher (26), der von einem Kühlfluid durchströmt wird, um dieses Arbeitsfluid zu kühlen, und Umlaufleitungen (30, 32, 34, 36) des Fluids umfasst, **dadurch gekennzeichnet, dass** er eine Vorrichtung (44) umfasst, um das Innere des Kreislaufes mit der Raumluft in Verbindung zu bringen, wobei die Vorrichtung im Falle einer Unfallsituation des Fahrzeugs operativ ist.

6. Geschlossener Kreislauf nach Anspruch 5, **dadurch gekennzeichnet, dass** die Vorrichtung eine Öffnung (46), die auf mindestens einem der Elemente des Kreislaufes angeordnet ist, und Ventilmittel (48) umfasst, die diese Öffnung kontrollieren.

7. Geschlossener Kreislauf nach Anspruch 6, **dadurch gekennzeichnet, dass** die Öffnung (46) auf mindestens einem der Tauscher (14, 26) angeordnet ist.

8. Geschlossener Kreislauf nach Anspruch 6, **dadurch gekennzeichnet, dass** die Öffnung (46) auf mindestens einer der Umlaufleitungen (30, 32, 34, 36) angeordnet ist.

9. Geschlossener Kreislauf nach Anspruch 6, **dadurch gekennzeichnet, dass** die Ventilmittel ein Ventil (48) umfassen, das zwischen einer äußersten Verschlussposition der Öffnung (46) und einer weiteren äußersten Freigabeposition der Öffnung kippt.

10. Kreislauf nach Anspruch 5, **dadurch gekennzeichnet, dass** die heiße Quelle (16) von den Auspuffgasen eines Verbrennungsmotors (20) stammt.

## Claims

1. A method of controlling a closed loop (10) performing a Rankine cycle for a motor vehicle, said loop comprising a circulation and compression pump (12) for a working fluid, a heat exchanger (14) swept by a hot source (16) for heating said working fluid, expansion means (22) for expanding the hot fluid and a cooling exchanger (26) swept by a cooling fluid (28) for cooling this working fluid, **characterized in that** it consists, after detecting a vehicle accident situation, in communicating the inside of the loop with the ambient air.

2. A method as claimed in claim 1, **characterized in that** it consists in communicating the loop with the ambient air after detecting violent impacts on the vehicle.

3. A method as claimed in claim 1, **characterized in that** it consists in communicating the loop with the ambient air after detecting a car fire.

4. A method as claimed in any one of claims 1 to 3, **characterized in that** it consists in controlling throttling means (48) for an opening (46) provided on the loop for communicating said loop with the ambient air.

5. A closed loop performing a Rankine cycle for a motor vehicle comprising a circulation and compression pump (12) for a working fluid, a heat exchanger (14) swept by a hot source (16) for heating said working fluid, expansion means (22) for expanding the hot fluid, a cooling exchanger (26) swept by a cooling fluid for cooling this working fluid and circulation lines (30,32,34,36) for said fluid, **characterized in that** it comprises a device (44) for communicating the inside of the loop with the ambient air, said device being operative in a vehicle accident situation.

6. A closed loop as claimed in claim 5, **characterized in that** the device comprises an opening (46) provided on at least one element of the loop and throttling means (48) controlling this opening.

7. A closed loop as claimed in claim 6, **characterized in that** opening (46) is provided on at least one of exchangers (14, 26).

8. A closed loop as claimed in claim 6, **characterized in that** opening (46) is provided on at least one of circulation lines (30, 32, 34, 36).

9. A closed loop as claimed in claim 6, **characterized in that** the throttling means comprise a valve (48) switching between an extreme position of closing opening (46) and another extreme position of clearing the opening.

10. A loop as claimed in claim 5, **characterized in that** hot source (16) comes from the exhaust gas of an internal-combustion engine (20).
